# EUROPEAN PATENT SPECIFICATION

(11) **EP 2 086 184 B1**
(45) Date of publication and mention of the grant of the patent: **18.12.2019**
(21) Application number: 08700042.8
(22) Date of filing: 03.01.2008
(51) Int. Cl.: H04L 29/06

(54) **SESSION MOBILITY METHOD AND SESSION MOBILITY SYSTEM**
SITZUNGSMOBILITÄTSVERFAHREN UND SITZUNGSMOBILITÄTSSYSTEM
PROCÉDÉ DE MOBILITÉ DE SESSION ET SYSTÈME DE MOBILITÉ DE SESSION

(30) Priority: 28.05.2007 CN 200710105262
(43) Date of publication of application: 05.08.2009
(73) Proprietor: Huawei Technologies Co., Ltd., Longgang District Shenzhen, Guangdong 518129 (CN)
(72) Inventor: CHEN, Jian, Shenzhen Guangdong 518129 (CN); WANG, Hao, Shenzhen Guangdong 518129 (CN); GUAN, Hongguang, Shenzhen Guangdong 518129 (CN)
(74) Representative: Kreuz, Georg Maria
(86) International application number: PCT/CN2008/070016
(87) International publication number: WO 2008/145026

(56) References cited:
- WO-A2-2006/017330
- CN-A- 1 404 670
- JP-A- 2004 248 165
- US-A1- 2006 126 648

## Description

### FIELD OF THE INVENTION

The present invention relates to the communication field, and in particular, to a method and system for session migration.

### BACKGROUND

Supposing that Alice is watching a new movie on the television in her lounge but she needs to prepare supper in the kitchen at six o'clock in the evening and does not want to miss the movie, she needs to watch the movie through a display device in the kitchen while preparing supper.

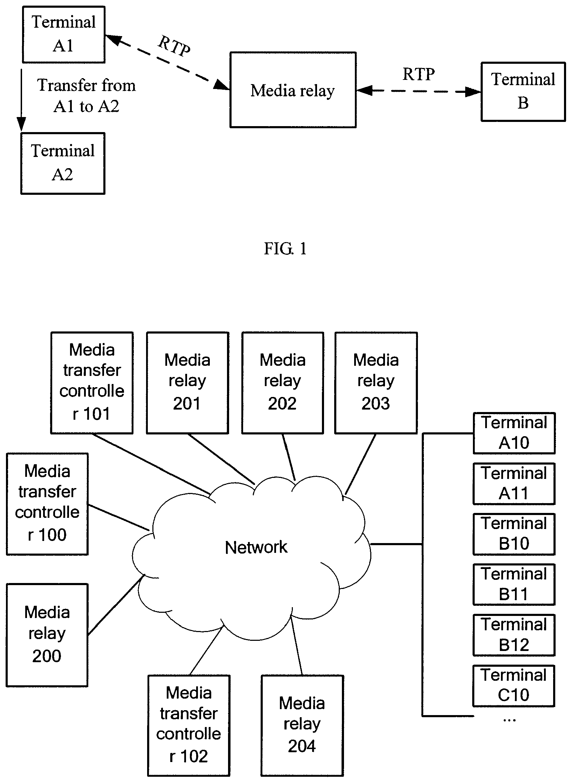

FIG. 1 shows the call forwarding service in the prior art. As shown in FIG. 1, a user A has two terminals A1 and A2, and a user B has a terminal B. The terminal A1 has created a session with a terminal B, and the media stream between them is forwarded through a media relay. The user A wants to move (transfer) the session from the terminal A1 to the terminal A2.

Based on the prior art, the process is:
The session and the media stream between the terminal A1 and terminal B are disconnected;
a session is created between the terminal A2 and terminal B through signaling; and
a media stream is created between the terminal A2 and terminal B.

In the foregoing example, the media stream needs to be disconnected first, and then a new media stream is created by setting up a new end-to-end signaling. Therefore, the session migration handled through the call forwarding service in the prior art is inferior in speed and efficiency.

Japanese Patent Application Publication No. 2004-248165A discloses a method for transferring a communication session in a network.

### SUMMARY

A method, system and media transfer controller for session migration are provided in various embodiments of the present invention to meet the requirements on speed and efficiency of the session migration service. The invention is defined by the appended claims.

The method for session migration is defined by the independent claim 1.

The system for session migration is defined by the independent claim 6.

The media transfer controller is is defined by the independent claim 5.

Through the foregoing method, it is not necessary to disconnect the media stream before transferring the session. Therefore, the speed and the efficiency of session migration are improved significantly, and the requirements on speed and efficiency of the session migration service are fulfilled.

### BRIEF DESCRIPTION OF THE DRAWINGS

FIG. 1 shows a call forwarding service in the prior art;
FIG. 2 shows a communication system for session migration in an embodiment of the present invention;
FIG. 3 is a flowchart of a session migration method provided in an embodiment of the present invention;
FIG. 4 is a signaling flowchart of a session migration method provided in an embodiment of the present invention in the first scenario;
FIG. 5 is a signaling flowchart of a session migration method provided in an example for understanding the invention in the second scenario;
FIG. 6 is a signaling flowchart of a session migration method provided in an example for understanding the invention in the third scenario;
FIG. 7 is a signaling flowchart of a session migration method provided in an example for understanding the invention in the fourth scenario; and
FIG. 8 is a signaling flowchart of a session migration method provided in an example for understanding the invention in the fifth scenario.

### DETAILED DESCRIPTION

The technical solution under the present invention is detailed below by reference to accompanying drawings and preferred embodiments.

FIG. 2 shows a communication system for session migration in an embodiment of the present invention. The communication system includes:
a media transfer controller, adapted to receive the media switching request from the terminal and interact with the media relay to implement media switching, and deployed in the terminal, session controller or media relay, or deployed separately, where one media transfer controller may control one or more media relays;
a media relay, adapted to forward media; and
a terminal, which is attached to a media controller and a media relay.

As shown in FIG. 2, a media transfer controller 100 controls a media relay 200; a media transfer controller 101 controls a media relay 201, a media relay 202, and a media relay 203; and a media transfer controller 102 controls a media relay 204. A terminal A10 and a terminal A11 are attached to the media transfer controller 100 and the media relay 200. A terminal B10 is attached to the media transfer controller 101 and the media relay 201. A terminal B11 is attached to the media transfer controller 101 and the media relay 202. A terminal B12 is attached to the media transfer controller 101 and the media relay 203. A terminal B10 is attached to the media transfer controller 102 and the media relay 204.

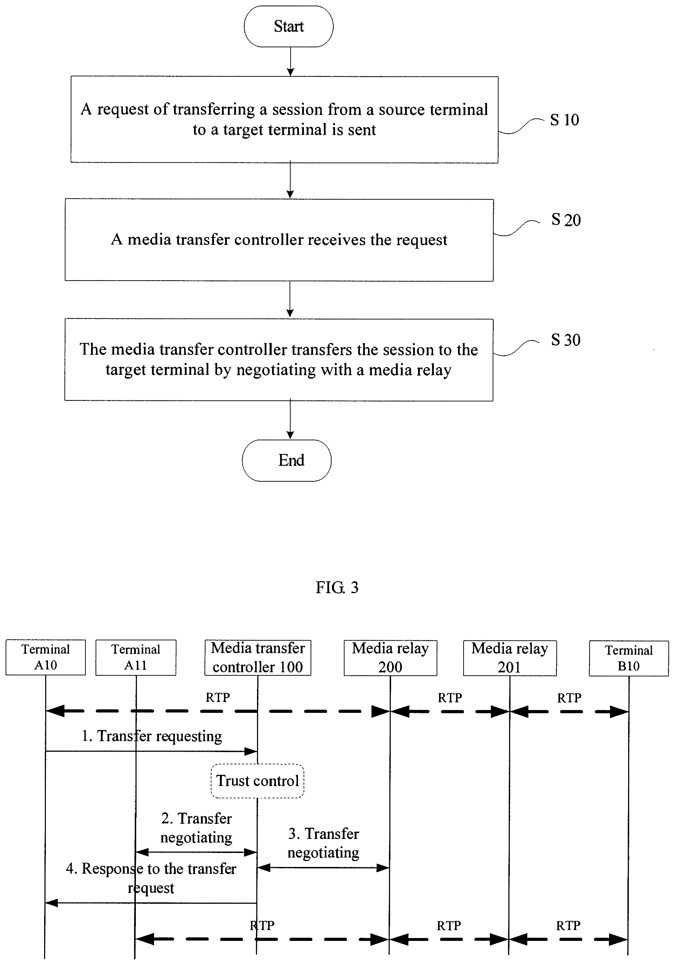

FIG. 3 is a flowchart of a session migration method provided in an embodiment of the present invention. The flowchart includes the following steps:
Step S10: A request for transferring a session from a source terminal to a target terminal is sent.
Step S20: The media transfer controller receives the request.
Step S30: The media transfer controller transfers the session to the target terminal by negotiating with the media relay.

It is not necessary to disconnect the media stream before transferring the session. Therefore, the speed and the efficiency of session migration are improved significantly, and the requirements on speed and efficiency of the session migration service are fulfilled.

The application of the foregoing method is detailed below through the scenarios illustrated FIG. 4 - FIG. 8.

FIG. 4 shows scenario 1: The source terminal triggers migration proactively.

As shown in FIG. 4, the terminals A10 and A11 are attached to the media transfer controller 100 and the media relay 200, and the terminal B10 is attached to the media relay 201 (this media relay is not controlled by the media transfer controller 100). The terminal A10 is in a conversation with the terminal B10. Through the terminal A10, the user requests to transfer the conversation to the terminal A11. In practice, the existing protocols such as Session Initiation Protocol (SIP), Media Gateway Control Protocol (MGCP), H.323, and H.248 may be applied or extended to implement the foregoing embodiment. Because the SIP is prevalent currently, the embodiment described here supposes that the SIP is applied. The steps are as follows:
1. The terminal A10 requests the media transfer controller 1100 to transfer the session to the terminal A11, and the media transfer controller 100 judges whether the session can be transferred from the terminal A10 to the terminal A11. For example, the terminal A10 sends a REFER message to the media controller 100, requesting to transfer the session. The message may include: session ID of the session between the terminal A10 and terminal the B10, ID of the target terminal A11, and validity period of session migration.
2. The media transfer controller 100 negotiates with the terminal A11 about transfer parameters. For example, the media controller 100 sends an INVITE message to the terminal A11. The INVITE message may carry the session description information used by the media relay 200 in transferring the current session, for example, the message may be encapsulated through the Session Description Protocol (SDP). The session description information includes: IP address, port number, coding format, and decoding format. After receiving the INVITE message, the terminal A11 may respond with a 200 OK message, which carries the session description information of the terminal A11, for example, the message is encapsulated through the SDP. The session description information includes: IP address, port number, coding format, and decoding format. After receiving the 200 OK message, the media controller 100 sends an acknowledgement (ACK) message to terminal A11.
3. The media transfer controller 100 negotiates with the media relay 200 about transfer parameters. For example, the media controller 100 sends an INVITE message to the terminal media relay 200. The INVITE message may carry the session description information used by terminal A11 in attempting to join the current session, for example, the message may be encapsulated through the SDP. The session description information includes: IP address, port number, coding format, and decoding format. After receiving the INVITE message, the terminal media relay 200 may respond with a 200 OK message, which carries the session description information of the terminal media relay 200, for example, the message is encapsulated through the SDP. The session description information includes: IP address, port number, coding format, and decoding format. After receiving the 200 OK message, the media controller 100 sends an ACK message to the terminal media relay 200.
4. The media transfer controller responds to the transfer request of the terminal A10. For example, the media controller 100 sends a 200 OK message to the terminal A10 in response to the REFER message.

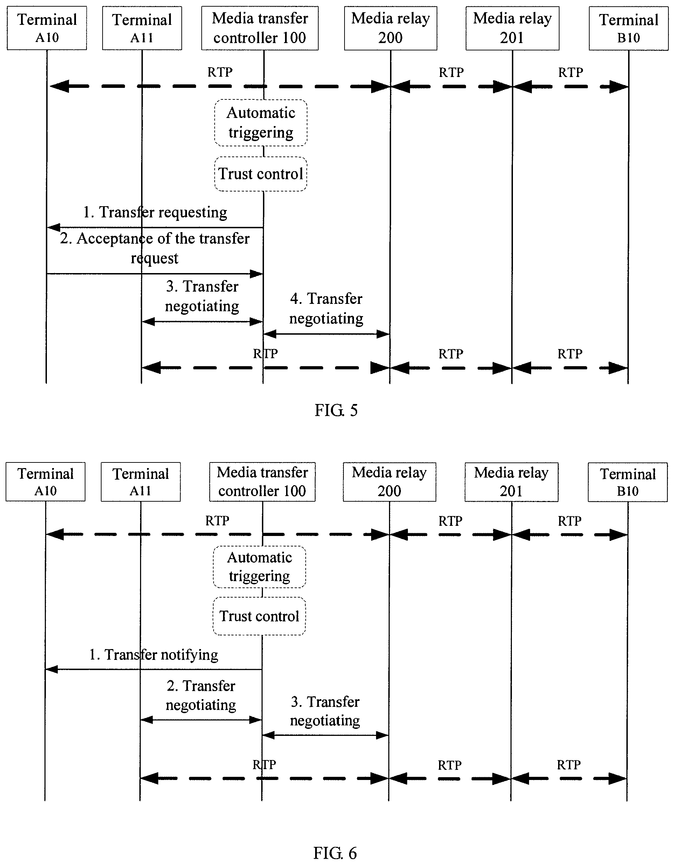

Through the messages sent in the foregoing step 2 and step 3, the signaling is set up between the terminal A11 and the media relay 200, and session information (such as IP address, port number, coding format, and decoding format) is negotiated between the terminal A11 and the media relay 100 through the session description information carried in such messages. According to the negotiation result, the terminal A11 and the media relay 100 can transfer the session, namely, transmit the media stream, for example, through a Real-time Transmission Protocol (RTP).
Contents corresponding to FIG. 5-FIG. 8 are examples for understanding the invention.

FIG. 5 shows scenario 2: The media transfer controller triggers migration, and the source terminal is controllable.

As shown in FIG. 5, the terminals A10 and A11 are attached to the media transfer controller 100 and the media relay 200, and the terminal B10 is attached to the media relay 201 (this media relay is not controlled by the media transfer controller 100). The terminal A10 is in a conversation with the terminal B10, the media transfer controller 100 triggers the transfer according to the environment perception system and the configuration system (for example, the terminal A10 is configured to transfer the session to the terminal A11 under certain time and place conditions, and the time and place parameters are obtained through the environment perception system). In this case, however, it is the terminal A10 that confirms whether to really transfer the session. The steps are as follows:
1. The media transfer controller 100 triggers a transfer request automatically. At this time, the media transfer controller 100 may judge whether the session can be transferred from the terminal A10 to the terminal A11 according to an established trust system. If the session can be transferred, the media transfer controller 100 sends a transfer confirmation request to the terminal A10.
2. The terminal A10 responds with a consent.
3. The media transfer controller 100 negotiates with the terminal A11 about transfer parameters.
4. The media transfer controller 100 negotiates with the media relay 200 about the transfer parameters, and then transfers the session to the target terminal through the RTP according to the negotiated transfer parameters.

FIG. 6 shows scenario 3: The media transfer controller triggers migration, and the source terminal is uncontrollable.

As shown in FIG. 6, the terminals A10 and A11 are attached to the media transfer controller 100 and the media relay 200, and the terminal B10 is attached to the media relay 201 (this media relay is not controlled by the media transfer controller 100). The terminal A10 is in a conversation with terminal B10, the media transfer controller 100 triggers the transfer according to the environment perception system and the configuration system (for example, the terminal A10 is configured to transfer the session to the terminal A11 under certain time and place conditions, and the time and place parameters are obtained through the environment perception system). In this case, the terminal does not need to confirm whether to really transfer the session, but the terminal is notified of the transfer. The steps are as follows:
1. The media transfer controller 100 triggers a transfer request automatically. At this time, the media transfer controller 100 may judge whether the session can be transferred from the terminal A10 to the terminal A11 according to an established trust system. If the session can be transferred, the media transfer controller notifies the terminal A10 that session transfer is required.
2. The media transfer controller 100 negotiates with the terminal A11 about transfer parameters.
3. The media transfer controller 100 negotiates with the media relay 200 about the transfer parameters, and then transfers the session to the target terminal through the RTP according to the negotiated transfer parameters.

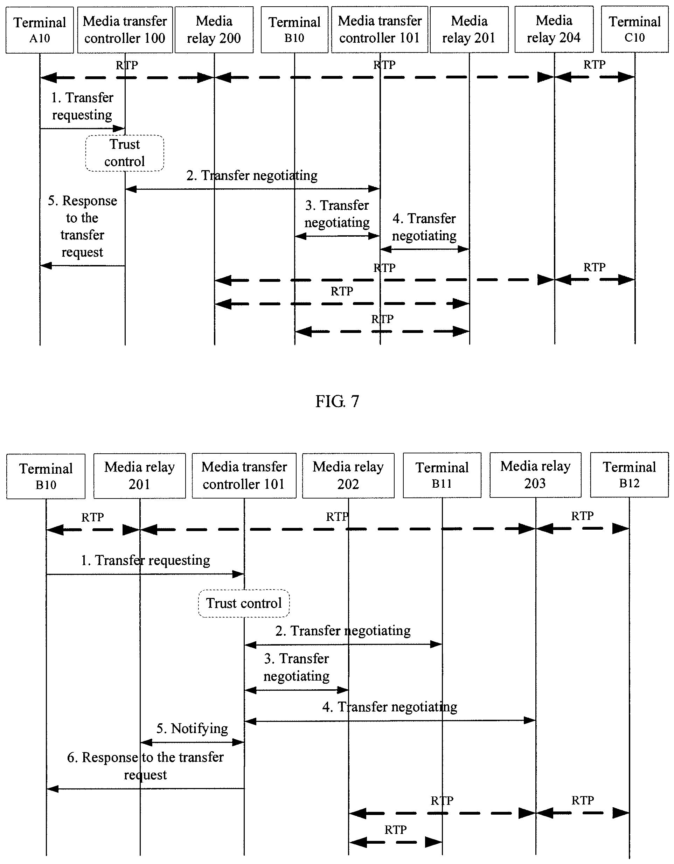

FIG. 7 shows scenario 4: The source terminal and the target terminal are attached to different media transfer controllers.

As shown in FIG. 7, the terminal A10 is attached to the media transfer controller 100 and the media relay 200, terminal B10 is attached to the media transfer controller 101 and the media relay 201, and a terminal C10 is attached to the media relay 204 (this media relay is not controlled by the media transfer controller 100 or the media transfer controller 101). The terminal A10 is in a conversation with the terminal C10. Through the terminal A10, the user requests to transfer the conversation to the terminal B10. The steps are as follows:
1. The terminal A10 requests the media transfer controller 100 to transfer the session. At this time, the media transfer controller 100 may judge whether the session can be transferred from the terminal A10 to the terminal B10 according to an established trust system.
2. The media transfer controller 100 negotiates with the media transfer controller 101 about transfer parameters.
3. The media transfer controller 101 negotiates with the terminal B10 about the transfer parameters.
4. The media transfer controller 101 negotiates with the media relay 201 about the transfer parameters.
5. The media transfer controller 100 responds to the transfer request of the terminal A10, and then transfers the session to the target terminal through the RTP according to the negotiated transfer parameters.

FIG. 8 shows scenario 5: One media transfer controller controls multiple media relays.

As shown in FIG. 8, the terminal B10, the terminal B11 and the terminal B12 are attached to the media transfer controller 101, the terminal B10 is attached to the media relay 201, the terminal B11 is attached to the media relay 202, and the terminal B12 is attached to the media relay 203. The media relay 201, the media relay 202, and the media relay 203 are controlled by the media transfer controller 101. The terminal B10 is in a conversation with the terminal B12. Through the terminal B10, the user requests to transfer the conversation to the terminal B11. The steps are as follows:
1. The terminal B10 requests the media transfer controller 101 to transfer the session. At this time, the media transfer controller 101 may judge whether the session can be transferred from the terminal **B10** to the terminal B11 according to an established trust system.
2. The media transfer controller 101 negotiates with the terminal **B11** about the transfer parameters.
3. The media transfer controller 101 negotiates with the media relay 202 about the transfer parameters.
4. The media transfer controller 101 negotiates with the media relay 203 about the transfer parameters.
5. The media transfer controller 101 notifies the media relay 201.
6. The media transfer controller 101 responds to the transfer request of the terminal B10, and then transfers the session to the target terminal through the RTP according to the negotiated transfer parameters.

To sum up, the session migration method under the present invention implements the session migration service without participation of the communication peer, without setting up any end-to-end signaling, thus accomplishing higher speed and efficiency and fulfilling the requirements on media transfer in session migration.

Preferably, buffering may be performed on the media relay to make the transfer smoother.

Preferably, the media relay sends media streams to the source terminal (a terminal A1) and the target terminal (a terminal A2) concurrently in a specific period, thus improving user experience.

Preferably, a media codec adapter may be deployed between the media relays or on the media relays.

Based on the foregoing method, a system for session migration is provided in an embodiment of the present invention. The system includes: a source terminal and a target terminal connected to a media transfer controller; a media transfer controller, receive the request for transferring a session from a source terminal to the target terminal, and transfer the session to the target terminal through negotiation with the media relay; and a media relay, configured to connect the target terminal with the media transfer controller.

Evidently, through the foregoing method, it is not necessary to disconnect the media stream before transferring the session. Therefore, the speed and the efficiency of session migration are improved significantly, and the requirements on speed and efficiency of the session migration service are fulfilled.

Although the invention is described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims.

## Claims

1. A method for session migration in a communication system, comprising:
receiving (1), by a media transfer controller (100), a request from a source terminal (A10) using a media session control protocol, the request indicating a transfer from a session between the source terminal (A10) and another terminal (B10) to a session between a target terminal (A11) and the other terminal (B10);
negotiating (2), by the media transfer controller (100), with the target terminal (A11) about transfer parameters using the media session control protocol, wherein the negotiating (2) with the target terminal (A11) comprises receiving a message from the target terminal (A11) carrying session description information of the target terminal (A11);
negotiating (3), by the media transfer controller (100), with a media relay (200) about transfer parameters using the media session control protocol, wherein the negotiating (3) with the media relay (200) comprises sending a message to the media relay carrying the session description information of the target terminal (A11), wherein the source terminal (A10) and the target terminal (A11) are attached to the media transfer controller (100) and the media relay (200) and the media transfer controller controls the media relay using the media session control protocol; and
responding (4), by the media transfer controller (100), to the request of the source terminal (A10).

2. The method of claim 1, the method further comprising:
sending (1), by the source terminal (A10), the request to the media transfer controller (100); and
transferring (5), by the media relay (200), the session between the source terminal (A10) and the other terminal (B10) to the session between the target terminal (A11) and the other terminal according to a negotiation result based on the negotiation between the media transfer controller (100) and the target terminal (A11) and the negotiation between the media transfer controller (100) and the media relay (200).

3. The method of claim 1 or 2, wherein the sending of the request indicating the transfer comprises:
triggering, by the source terminal, the request for transferring the session to the target terminal proactively, and sending the request to the media transfer controller.

4. The method of claim 2, wherein the method further comprises:
confirming, by the media transfer controller, that the session can be transferred to the target terminal through a trust system.

5. A media transfer controller (100), configured to:
receive (1), using a media session control protocol, a request indicating a transfer from a session between a source terminal (A10) and another terminal (B10) to a session between a target terminal (A11) and the other terminal (B10), the request sent by the source terminal (A10);
negotiate (2) with the target terminal (A11) about transfer parameters using the media session control protocol, wherein the negotiating (2) with the target terminal (A11) comprises receiving a message from the target terminal (A11) carrying session description information of the target terminal;
negotiate (3) with a media relay (200) about transfer parameters using the media session control protocol, wherein the negotiating (3) with the media relay (200) comprises sending a message to the media relay carrying the session description information of the target terminal (A11); and
respond (4) to the request of the source terminal (A10).

6. A system for session migration, comprising: the media transfer controller of claim 5, the source terminal (A10), the target terminal (A11) and the media relay (200), wherein the source terminal (A10) and the target terminal (A11) are attached to the media transfer controller (100) and the media relay (200).

## Patentansprüche

1. Verfahren zur Sitzungsmigration in einem Kommunikationssystem, umfassend:
Empfangen (1) einer Anforderung von einem Quell-Endgerät (A10) durch eine Medientransfersteuerung (100) unter Verwendung eines Mediensitzungssteuerprotokolls, wobei die Anforderung einen Transfer von einer Sitzung zwischen dem Quell-Endgerät (A10) und einem anderen Endgerät (B10) zu einer Sitzung zwischen einem Ziel-Endgerät (A11) und dem anderen Endgerät (B10) angibt;
Verhandeln (2) über Transferparameter durch die Medientransfersteuerung (100) mit dem Ziel-Endgerät (A11) unter Verwendung des Mediensitzungssteuerprotokolls, wobei das Verhandeln (2) mit dem Ziel-Endgerät (A11) das Empfangen einer Nachricht von dem Ziel-Endgerät (A11) umfasst, die Sitzungsbeschreibungsinformation des Ziel-Endgeräts (A11) trägt;
Verhandeln (3) über Transferparameter durch die Medientransfersteuerung (100) mit einem Media-Relay (200) unter Verwendung des Mediensitzungssteuerprotokolls, wobei das Verhandeln (3) mit dem Media-Relay (200) das Senden einer Nachricht zu dem Media-Relay umfasst, die die Sitzungsbeschreibungsinformation des Ziel-Endgeräts (A11) trägt, wobei das Quell-Endgerät (A10) und das Ziel-Endgerät (A11) an die Medientransfersteuerung (100) und das Media-Relay (200) angeschlossen sind und die Medientransfersteuerung das Media-Relay unter Verwendung des Mediensitzungssteuerprotokolls steuert; und
Antworten (4) durch die Medientransfersteuerung (100) auf die Anforderung des Quell-Endgeräts (A10).

2. Verfahren nach Anspruch 1, wobei das Verfahren ferner umfasst:
Senden (1) der Anforderung durch das Quell-Endgerät (A10) zu der Medientransfersteuerung (100); und
Übertragen (5), durch das Media-Relay (200), der Sitzung zwischen dem Quell-Endgerät (A10) und dem anderen Endgerät (B10) zu der Sitzung zwischen dem Ziel-Endgerät (A11) und dem anderen Endgerät entsprechend einem Verhandlungsergebnis, basierend auf der Verhandlung zwischen der Medientransfersteuerung (100) und dem Ziel-Endgerät (A11) und der Verhandlung zwischen der Medientransfersteuerung (100) und dem Media-Relay (200).

3. Verfahren nach Anspruch 1 oder 2, wobei das Senden der Anforderung mit der Angabe der Übertragung umfasst:
Auslösen, durch das Quell-Endgerät, der Anforderung zum proaktiven Übertragen der Sitzung zu dem Ziel-Endgerät und Senden der Anforderung zu der Medientransfersteuerung.

4. Verfahren nach Anspruch 2, wobei das Verfahren ferner umfasst:
Bestätigen durch die Medientransfersteuerung, dass die Sitzung durch ein Vertrauenssystem zu dem Ziel-Endgerät übertragen werden kann.

5. Medientransfersteuerung (100), ausgelegt zum
Empfangen (1), unter Verwendung eines Mediensitzungssteuerprotokolls, einer Anforderung mit der Angabe eines Transfers von einer Sitzung zwischen einem Quell-Endgerät (A10) und einem anderen Endgerät (B10) zu einer Sitzung zwischen einem Ziel-Endgerät (A11) und dem anderen Endgerät (B10), wobei die Anforderung durch das Quell-Endgerät (A10) gesendet wird;
Verhandeln (2) mit dem Ziel-Endgerät (A11) über Transferparameter unter Verwendung des Mediensitzungssteuerprotokolls, wobei das Verhandeln (2) mit dem Ziel-Endgerät (A11) das Empfangen einer Nachricht von dem Ziel-Endgerät (A11) umfasst, die Sitzungsbeschreibungsinformation des Ziel-Endgeräts trägt; Verhandeln (3) mit einem Media-Relay (200) über Transferparameter unter Verwendung des Mediensitzungssteuerprotokolls, wobei das Verhandeln (3) mit dem Media-Relay (200) das Senden einer Nachricht zu dem Media-Relay umfasst, die die Sitzungsbeschreibungsinformation des Ziel-Endgeräts (A11) trägt; und
Antworten (4) auf die Anforderung des Quell-Endgeräts (A10).

6. System zur Sitzungsmigration, umfassend die Medientransfersteuerung nach Anspruch 5, das Quell-Endgerät (A10), das Ziel-Endgerät (A11) und das Media-Relay (200), wobei das Quell-Endgerät (A10) und das Ziel-Endgerät (A11) an die Medientransfersteuerung (100) und das Media-Relay (200) angeschlossen sind.

## Revendications

1. Procédé de migration de session dans un système de communication, comprenant :
la réception (1), par un contrôleur de transfert multimédia (100), d'une requête provenant d'un terminal source (A10) utilisant un protocole de commande de session multimédia, la requête indiquant un transfert d'une session entre le terminal source (A10) et un autre terminal (B10) vers une session entre un terminal cible (A11) et l'autre terminal (B10) ;
la négociation (2), par le contrôleur de transfert multimédia (100), avec le terminal cible (A11) concernant des paramètres de transfert en utilisant le protocole de commande de session multimédia, la négociation (2) avec le terminal cible (A11) comprenant la réception d'un message du terminal cible (A11) portant des informations de description de session du terminal cible (A11) ;
la négociation (3), par le contrôleur de transfert multimédia (100), avec un relais multimédia (200) concernant des paramètres de transfert en utilisant le protocole de commande de session multimédia, la négociation (3) avec le relais multimédia (200) comprenant l'envoi d'un message au relais multimédia portant les informations de description de session du terminal cible (A11), le terminal source (A10) et le terminal cible (A11) étant reliés au contrôleur de transfert multimédia (100) et au relais multimédia (200) et le contrôleur de transfert multimédia commandant le relais multimédia en utilisant le protocole de commande de session multimédia ; et
la réponse (4), par le contrôleur de transfert multimédia (100), à la demande du terminal source (A10).

2. Procédé selon la revendication 1, le procédé comprenant en outre :
l'envoi (1), par le terminal source (A10), de la demande au contrôleur de transfert de support (100) ; et
le transfert (5), par le relais multimédia (200), de la session entre le terminal source (A10) et l'autre terminal (B10) à la session entre le terminal cible (A11) et
l'autre terminal selon un résultat de négociation basé sur la négociation entre le contrôleur de transfert multimédia (100) et le terminal cible (A11) et la négociation entre le contrôleur de transfert multimédia (100) et le relais multimédia (200).

3. Procédé selon la revendication 1 ou 2, l'envoi de la requête indiquant le transfert comprenant :
le déclenchement, par le terminal source, de la demande de transfert proactivement de la session vers le terminal cible, et l'envoi de la demande au contrôleur de transfert multimédia.

4. Procédé selon la revendication 2, le procédé comprenant en outre :
la confirmation, par le contrôleur de transfert multimédia, que la session peut être transférée au terminal cible via un système de confiance.

5. Contrôleur de transfert multimédia (100), configuré pour :
recevoir (1), en utilisant un protocole de commande de session multimédia, une requête indiquant un transfert d'une session entre un terminal source (A10) et un autre terminal (B10) vers une session entre un terminal cible (A11) et l'autre terminal (B10), la requête étant envoyée par le terminal source (A10) ;
négocier (2) avec le terminal cible (A11) concernant des paramètres de transfert en utilisant le protocole de commande de session multimédia, la négociation (2) avec le terminal cible (A11) comprenant la réception d'un message du terminal cible (A11) portant les informations de description de session du terminal cible ;
négocier (3) avec un relais média (200) concernant des paramètres de transfert en utilisant le protocole de commande de session multimédia, la négociation (3) avec le relais média (200) comprenant l'envoi d'un message au relais média portant les informations de description de session du terminal cible (A11) ; et
répondre (4) à la demande du terminal source (A10).

6. Système de migration de session, comprenant :
le contrôleur de transfert multimédia selon la revendication 5, le terminal source (A10), le terminal cible (A11) et le relais multimédia (200), le terminal source (A10) et le terminal cible (A11) étant reliés au contrôleur de transfert multimédia (100) et au relais multimédia (200).
